# EUROPEAN PATENT SPECIFICATION

(11) **EP 4 175 140 B1**
(45) Date of publication and mention of the grant of the patent: **07.10.2026**
(21) Application number: 21896373.4
(22) Date of filing: 30.07.2021
(51) Int. Cl.: H02K 49/10

(54) **MAGNETIC GEAR ASSEMBLY AND ELECTRIC MOTOR**
MAGNETISCHE GETRIEBEANORDNUNG UND ELEKTRISCHER MOTOR
ENSEMBLE ENGRENAGE MAGNÉTIQUE ET MOTEUR ÉLECTRIQUE

(30) Priority: 30.11.2020 CN 202011376814
(43) Date of publication of application: 03.05.2023
(73) Proprietor: Gree Electric Appliances, Inc. of Zhuhai, Zhuhai, Guangdong 519070 (CN)
(72) Inventor: HU, Yusheng, Zhuhai, Guangdong 519070 (CN); CHEN, Bin, Zhuhai, Guangdong 519070 (CN); MA, Xiaohao, Zhuhai, Guangdong 519070 (CN); LI, Quanfeng, Zhuhai, Guangdong 519070 (CN); GUI, Pengqian, Zhuhai, Guangdong 519070 (CN)
(74) Representative: Appleyard Lees IP LLP
(86) International application number: PCT/CN2021/109495
(87) International publication number: WO 2022/110866

(56) References cited:
- EP-A2- 2 763 298
- CN-A- 107 196 484
- CN-A- 107 196 484
- CN-A- 111 404 342
- CN-A- 112 491 247
- JP-A- 2014 015 991
- ABDELHAMID DALIA ZAKY; KNIGHT ANDREW M.: "The effect of modulating ring design on induction machine with integrated magnetic gear torque", 2017 IEEE ENERGY CONVERSION CONGRESS AND EXPOSITION (ECCE), IEEE, 1 October 2017 (2017-10-01), pages 1169 - 1174, XP033246936, DOI: 10.1109/ECCE.2017.8095921

## Description

### TECHNICAL FIELD

The present invention relates to the field of contactless transmission equipment, and more particularly, to a magnetic gear assembly, and a compound motor.

### BACKGROUND

The magnetic gear assembly generally includes an inner rotor, a magnetism modulating ring, and an outer rotor. Permanent magnets are provided on the outer peripheral surface of the inner rotor and the inner peripheral surface of the outer rotor, and the magnetism modulating ring is an annular structure formed by a plurality of pieces of iron cores assembled at equal intervals. However, the iron core in the conventional magnetism modulating ring has a rectangular-like structure, and the magnetism modulating ring provided with the rectangular-like structure has a limited effect on the magnetic field modulation, and the magnetic leakage between the iron cores is severe, thus reducing the output torque of the magnetic gear assembly. In addition, during manufacture of the magnetism modulating ring, a flux bridge needs to be added to serve as a connection between two adjacent rectangle-like iron cores, and the flux bridge causes relatively severe magnetic leakage due to an unreasonable structure of the flux bridge, thus causing the output torque of the magnetic gear assembly to be further reduced.

Document EP2763298 A2 discloses a power transmission device which uses magnetism.

### SUMMARY

The main objective of the present invention is to provide a magnetism modulating ring structure, a magnetic gear assembly, and a compound motor to solve the problems in the prior art that the iron core on the magnetism modulating ring has a rectangular-like structure, and that the magnetism modulating ring provided with the rectangular-like structure has a limited effect on the magnetic field modulation, and that the magnetic leakage between the iron cores is severe, thus reducing the output torque of the magnetic gear assembly.

In order to achieve the above objective, a magnetic gear assembly is provided and includes a first rotor structure, a second rotor structure, and a magnetism modulating ring structure. The first rotor structure is sleeved on an outer peripheral side of a rotational shaft structure, and a first magnetic member is provided on an outer peripheral surface of the first rotor structure. The second rotor structure is sleeved over an outer peripheral side of the first rotor structure, and a second magnetic member is provided on an inner peripheral surface of the second rotor structure. The magnetism modulating ring structure is arranged in an annular gap enclosed by the first magnetic member and the second magnetic member, and includes a plurality of modulating units and a plurality of connection parts, wherein each two adjacent modulating units are connected by one of the plurality of connection parts to form the magnetism modulating ring structure. A groove structure is formed on one side of the modulating unit facing the first rotor structure, and two sides of the groove structure respectively form a curved boot-like part, and an edge of the curved boot-like part facing the second rotor structure has a curved contour line parallel to flux lines passing through an inside of the curved boot-like part.

In some embodiments, adjacent curved boot-like parts are connected by a connection part.

In some embodiments, the plurality of connection parts are made of magnetic material. Two adjacent curved boot-like parts and the connection part form a flux bridge structure. One end of the curved boot-like part away from the connection part forms a flux bridge head of the flux bridge structure, and the connection part forms a flux bridge center of the flux bridge structure.

In some embodiments, t1 denotes a thickness of the flux bridge head of the flux bridge structure, t2 denotes a thickness between an outer circumferential surface of the modulating unit and a boot bottom of the curved boot-like part, and t1 and t2 satisfy: 0.25≤ t1/t2≤0.3.

In some embodiments, t3 denotes a thickness of the flux bridge center of the flux bridge structure, and t3 satisfies: t3≤0.5mm.

In some embodiments, a groove wall surface of the groove structure is a first curved face, and r1 denotes a radius of curvature of the first curved face. A smooth transition is arranged between a side surface of the curved boot-like part facing the second rotor structure and a side surface of the connection part facing the second rotor structure, to form a curved transitional surface. The curved contour line of the curved transitional surface is parallel to the flux lines passing through the inside of the curved boot-like part. r2 denotes a radius of curvature of the curved transitional surface, and r1 and r2 satisfy: r2=5×r1.

In some embodiments, each modulating unit has a first side and a second side which are arranged to be opposite to each other; a1 denotes an included angle formed between the first side and the second side of each modulating unit, and a2 denotes an included angle formed between the first side of one modulating unit and the first side of the other modulating unit of two adjacent modulating units; a1 and a2 satisfy: 0.4≤a1/a2≤0.5; and r1 and a1 satisfy: 0.2≤ r1/a1≤0.3.

In some embodiments, the plurality of connection parts are made of nonmagnetic material; t4 denotes a thickness of one end of the curved boot-like part away from the connection part; t5 denotes a thickness between an outer circumferential surface of the modulating unit and a boot bottom of the curved boot-like part; and t4 and t5 satisfy: 0.25≤ t4/t5≤0.3.

In some embodiments, a boot face of the curved boot-like part is a second curved face, and r3 denotes a radius of curvature of the second curved face; a groove wall surface of the groove structure is a third curved face, and r4 denotes a radius of curvature of the third curved face; and r3 and r4 satisfy: r3=4 ×r4.

In some embodiments, each modulating unit has a first side and a second side which are arranged to be opposite to each other; a3 denotes an included angle formed between the first side and the second side of each modulating unit; a4 denotes an included angle formed between boot heads of two curved boot-like parts of each modulating unit; a3 and a4 satisfy: 0.5≤a3/a4 ≤0.6; and r4 and a3 satisfy: 0.2≤r4/a3≤0.3.

In some embodiments, the plurality of connection parts and the plurality of modulating units are formed integrally.

In some embodiments, a rotational speed of the first rotor structure is greater than a rotational speed of the magnetism modulating ring structure, and a rotational speed of the second rotor structure is zero.

In some embodiments, a gap is arranged between the magnetism modulating ring structure and the first magnetic member, and a gap is arranged between the magnetism modulating ring structure and the second magnetic member.

In some embodiments, multiple first magnetic members are arranged, and the multiple first magnetic members are arranged at intervals along a circumferential direction of the first rotor structure. And/or multiple second magnetic members are provided, and the multiple second magnetic members are arranged at intervals along a circumferential direction of the second rotor structure.

According to another aspect of the present invention, a compound motor is provided, and the compound motor includes a magnetic gear assembly, and the magnetic gear assembly is the magnetic gear assembly described above.

In the technical solutions of the present invention, by modifying the structure of the modulating unit, each modulating unit has the groove structure and two curved boot-like parts. During an operation of the magnetic gear assembly, the groove structure can effectively reduce a variation amplitude of the magnetic density harmonic between the modulating units, thereby reducing the eddy current loss as much as possible. In addition, since an edge of the curved boot-like part has a curved contour line parallel to the flux lines passing through the inside of the curved boot-like part as possible, thus ensuring as many flux lines as possible to pass smoothly, thereby reducing the magnetic leakage between two adjacent modulating units effectively, and greatly improving the output torque of the magnetic gear assembly.

### BRIEF DESCRIPTION OF THE DRAWINGS

The accompanying drawings constituting a portion of the present invention are used to make the present invention to be further understood. The exemplary embodiments of the present invention and the description thereof are used to illustrate the present invention. In the accompanying drawings:
FIG. 1 shows a schematic structural view of a magnetic gear assembly mounted on a rotational shaft structure according to an alternative embodiment of the present invention;
FIG. 2 shows a schematic view of a magnetism modulating ring structure of the magnetic gear assembly in FIG. 1, in which a connection part and a modulating unit are integrally formed;
FIG. 3 shows a schematic view of the magnetism modulating ring structure of the magnetic gear assembly in FIG. 1, in which the connection part made of nonmagnetic material is omitted;
FIG. 4 shows a curve of an output torque of the magnetic gear assembly in FIG. 1 changing with t1/t2;
FIG. 5 shows a curve of the output torque of the magnetic gear assembly in FIG. 1 changing with a1/a2;
FIG. 6 shows a curve of an eddy current loss of the magnetic gear assembly in FIG. 1 changing with r1/a1;
FIG. 7 shows a curve of the output torque of the magnetic gear assembly in FIG. 1 changing with r1/a1;
FIG. 8 is a view showing a comparison between an output torque of a flux bridge structure of an alternative embodiment of the present invention and an output torque of an existing flux bridge structure;
FIG. 9 shows flux lines of the magnetic gear assembly distributed in the magnetism modulating ring structure according to an alternative embodiment of the present invention;
FIG. 10 shows a comparison of radial magnetic density harmonic distributions at an inner air gap;
FIG. 11 shows a comparison of tangential magnetic density harmonic distributions at the inner air gap; and
FIG. 12 is a view showing a comparison between an output torque of a magnetism modulating ring structure of an alternative embodiment of the present invention and an output torque of an existing magnetism modulating ring structure.

### DETAILED DESCRIPTION OF THE EMBODIMENTS

The technical solutions in the embodiments of the present invention will be described clearly and completely hereinafter by combining with the accompanying drawings in the embodiments of the present invention.

In order to solve the problems in the prior art that the iron core on the magnetism modulating ring has a rectangular-like structure, and that the magnetism modulating ring provided with the rectangular-like structure has a limited effect on the magnetic field modulation, and that the magnetic leakage between the iron cores is severe, thus reducing the output torque of the magnetic gear assembly, the present invention provides a magnetic gear assembly, and a compound motor. The compound motor includes the magnetic gear assembly, and the magnetic gear assembly is the magnetic gear assembly described herein.

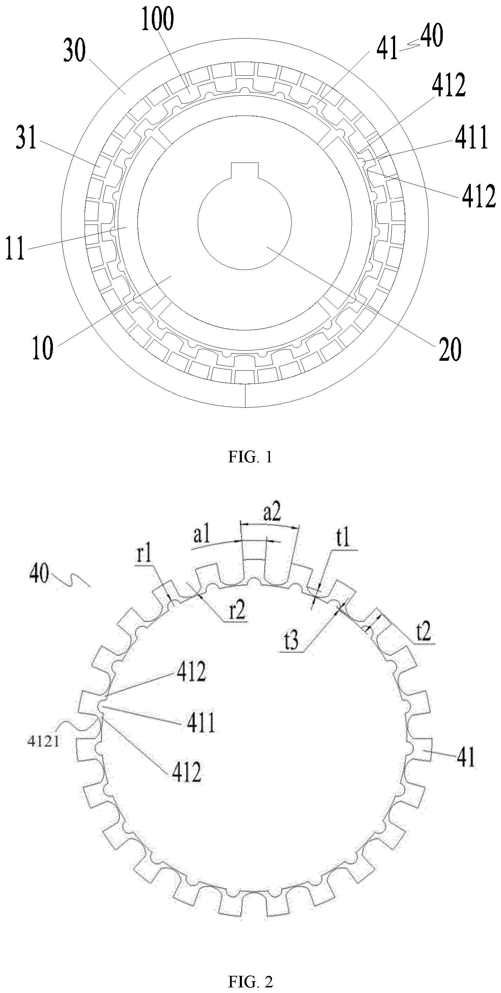

As shown in FIG. 1, the magnetic gear assembly includes a first rotor structure 10, a second rotor structure 30, and a magnetism modulating ring structure 40. The first rotor structure 10 is sleeved on an outer peripheral side of the rotational shaft structure 20, and a first magnetic member 11 is provided on an outer peripheral surface of the first rotor structure 10. The second rotor structure 30 is sleeved over an outer peripheral side of the first rotor structure 10, and a second magnetic member 31 is arranged on the inner peripheral surface of the second rotor structure 30. The magnetism modulating ring structure 40 is arranged in an annular gap 100 enclosed by the first magnetic member 11 and the second magnetic member 31, and the magnetism modulating ring structure 40 is the magnetism modulating ring structure described herein.

It should be noted that in the embodiments of the present invention, a rotation speed of the first rotor structure 10 is greater than a rotation speed of the magnetism modulating ring structure 40, and a rotation speed of the second rotor structure 30 is zero.

It should be noted that in the embodiments of the present invention, a gap is arranged between the magnetism modulating ring structure 40 and the first magnetic member 11, and a gap is arranged between the magnetism modulating ring structure 40 and the second magnetic member 31, thereby enabling the magnetic gear assembly to realize a contactless torque transmission.

As shown in FIG. 1, multiple first magnetic members 11 are provided, and the multiple first magnetic members 11 are arranged at intervals along a circumferential direction of the first rotor structure 10, and multiple second magnetic members 31 are provided, and the multiple second magnetic members 31 are arranged at intervals along a circumferential direction of the second rotor structure 30.

### First embodiment

As shown in FIG. 2, the magnetism modulating ring structure includes a plurality of modulating units 41, and each two adjacent modulating units 41 are connected by a connection part to form the magnetism modulating ring structure, and the magnetism modulating ring structure is arranged within the annular gap 100 enclosed by the first rotor structure 10 and the second rotor structure 30. A groove structure 411 is formed on one side of the modulating unit 41 facing the first rotor structure 10, and two sides of the groove structure 411 respectively form a curved boot-like part 412.

By modifying the structure of the modulating unit 41, each modulating unit 41 has the groove structure 411 and two curved boot-like parts 412. During an operation of the magnetic gear assembly, the groove structure 411 can effectively reduce a variation amplitude of the magnetic density harmonic between the modulating units 41, thereby reducing the eddy current loss as much as possible. In addition, since an edge of the curved boot-like part 412 has a curved contour line 4121 parallel to the flux lines passing through the inside of the curved boot-like part 412 as possible, thus ensuring as many flux lines as possible to pass smoothly, thereby reducing the magnetic leakage between two adjacent modulating units 41 effectively, and greatly improving the output torque of the magnetic gear assembly.

It should be noted that, in the present embodiment, in order to reduce the difficulty in manufacturing the magnetism modulating ring structure, alternatively, the adjacent curved boot-like parts 412 are connected by the connection parts. Further, the connection parts and the modulating units 41 are formed integrally, thereby ensuring subsequent overlaying and forming of the magnetism modulating ring structure.

As shown in FIG. 2, the connection part is made of magnetic material, two adjacent curved boot-like parts 412 and the connection part form a flux bridge structure. One end of the curved boot-like part 412 away from the connection part forms a flux bridge head of the flux bridge structure, and the connection part forms a flux bridge center of the flux bridge structure. t1 denotes a thickness of the flux bridge head of the flux bridge structure, and t2 denotes a thickness between an outer circumferential surface of the modulating unit 41 and the boot bottom of the curved boot-like part 412, and t1 and t2 satisfy: 0.25 ≤t1/t2≤0.3. In this case, by optimizing a ratio of the thickness t1 of the flux bridge head to the thickness t2 between the outer circumferential surface of the modulating unit 41 and the boot bottom of the curved boot-like part 412, thereby avoiding the case that the flux lines cannot be guided better due to a too small ratio of the thickness t1 of the flux bridge head to the thickness t2 between the outer circumferential surface of the modulating unit 41 and the boot bottom of the curved boot-like part 412, and avoiding a magnetic leakage phenomenon due to a too large ratio of the thickness t1 of the flux bridge head to the thickness t2 between the outer circumferential surface of the modulating unit 41 and the boot bottom of the curved boot-like part 412.

As shown in FIG. 2, t3 denotes a thickness of the flux bridge center of the flux bridge structure, and t3 satisfies: T3≤0.5mm, thereby avoiding a severe magnetic leakage phenomenon due to a too large thickness of the flux bridge center of the flux bridge structure.

As shown in FIG. 2, the groove wall surface of the groove structure 411 is a first curved face, and r1 denotes a radius of curvature of the first curved face. A smooth transition is arranged between a side surface of the curved boot-like part 412 facing the second rotor structure 30 and a side surface of the connection part facing the second rotor structure 30, to form a curved transitional surface. A curved contour line 4121 of the curved transitional surface is parallel to the flux lines passing through the inside of the curved boot-like part 412. r2 denotes a radius of curvature of the curved transitional surface, and r1 and r2 satisfy: r2=5×r1. In this case, flux lines can be ensured to pass through the flux bridge structure smoothly as many as possible, thereby reducing the magnetic leakage as much as possible.

As shown in FIG. 2, each modulating unit 41 has a first side and a second side which are arranged to be opposite to each other. a1 denotes an included angle formed between the first side and the second side of each modulating unit 41, and a2 denotes an included angle formed between the first side of one modulating unit 41 and the first side of the other modulating unit 41 of two adjacent modulating units 41, and a1 and a2 satisfy: 0.4≤a1/a2≤0.5, and r1 and a1 satisfy: 0.2≤r1/a1≤0.3, thereby avoiding the case that the modulating units 41 are distributed to be too dense to guide the flux lines.

### Second embodiment

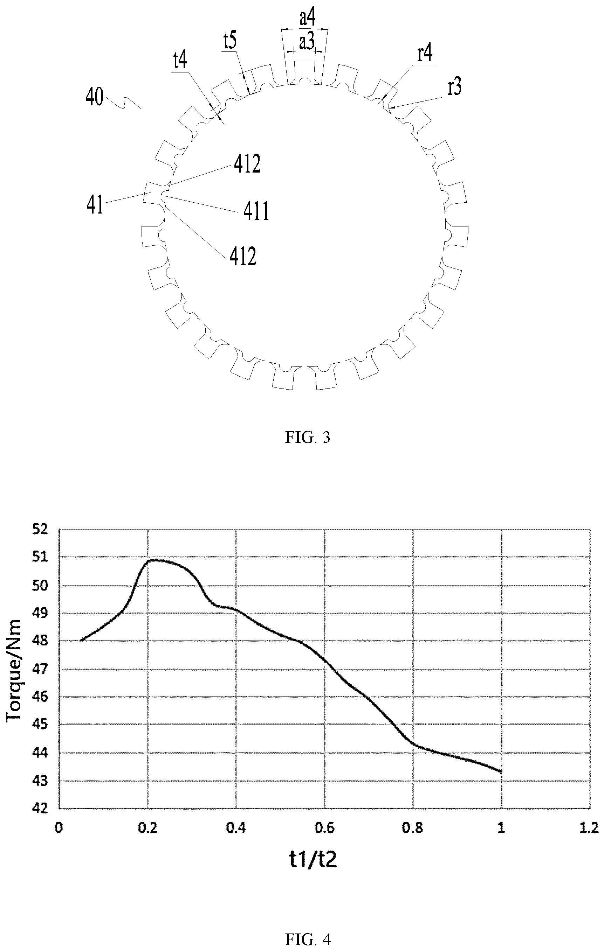

It should be noted that, as shown in FIG. 3, the present embodiment differs from the first embodiment in that: the connection part is made of nonmagnetic material; t4 denotes a thickness of one end of the curved boot-like part 412 away from the connection part, and t5 denotes a thickness between the outer circumferential surface of the modulating unit 41 and the boot bottom of the curved boot-like part 412, and t4 and t5 satisfy: 0.25≤t4/t5≤0.3. In this case, the magnetic leakage caused by the presence of the flux bridge structure may be reduced as much as possible, thereby ensuring the output torque of the magnetic gear assembly to be as large as possible.

It should be noted that in the present embodiment, in order to connect all modulating units 41 conveniently to form the magnetism modulating ring structure, all the modulating units 41 are connected by the connection parts made of nonmagnetic material, which facilitates not only the subsequent overlaying and forming but also an installation of the magnetism modulating ring structure.

As shown in FIG. 3, a boot face of the curved boot-like part 412 is a second curved face, and r3 denotes a radius of curvature of the second curved face. The groove wall surface of the groove structure 411 is a third curved face, and r4 denotes a radius of curvature of the third curved face, and r3 and r4 satisfy: r3=4×r4. In this case, the curved boot-like part 412 is ensured to guide the flux lines as many as possible, thereby ensuring that the flux lines can pass through the curved boot-like part 412 smoothly.

As shown in FIG. 3, each modulating unit 41 has a first side and a second side which are arranged to be opposite to each other. a3 denotes an included angle formed between the first side and the second side of each modulating unit 41, and a4 denotes an included angle formed between boot heads of two curved boot-like parts 412 of each modulating unit 41, and a3 and a4 satisfy: 0.5≤a3/a4≤0.6, and r4 and a3 satisfy: 0.2≤r4/a3≤0.3. In this case, flux lines are ensured to pass through the curved boot-like parts 412 smoothly, thereby reducing the magnetic leakage as much as possible, and further improving the output torque of the magnetic gear assembly.

It should be noted that, in the embodiments of the present invention, each modulating unit 41 has the first side and the second side which are arranged to be opposite to each other. The first side and the second side may be named according to the counterclockwise direction of the magnetism modulating ring structure or may be named according to the clockwise direction of the magnetism modulating ring structure.

FIG. 4 shows a curve of an output torque of the magnetic gear assembly changing with t1/t2. As can be seen from FIG. 4, when t1/t2=0.2, the output torque of the magnetic gear assembly reaches a peak of about 51Nm. When t1/t2<0.2, the output torque of the magnetic gear assembly increases as the ratio t1/t2 increases. When t1/t2>0.2, the output torque of the magnetic gear assembly decreases as the ratio t1/t2 increases.

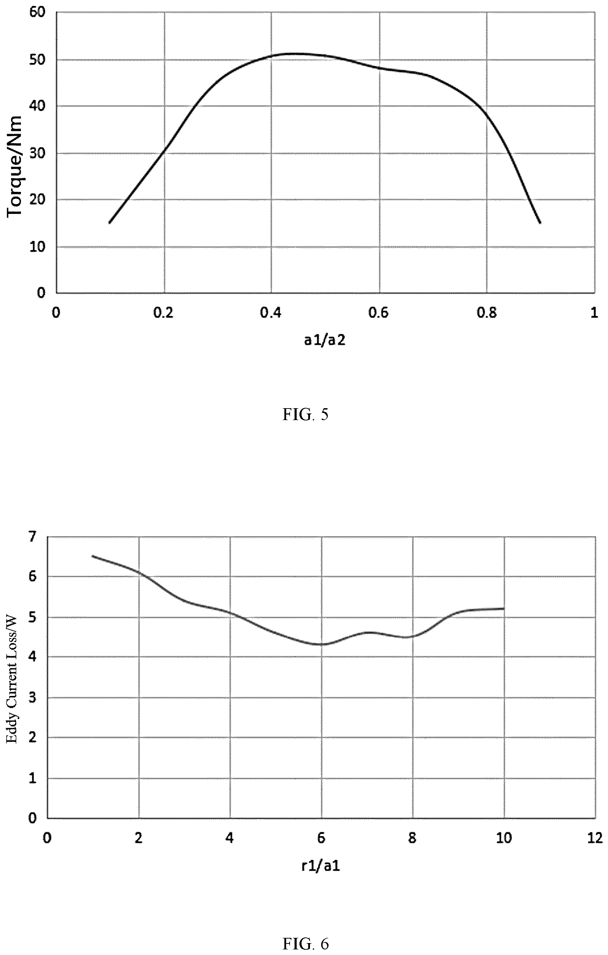

FIG. 5 shows a curve of the output torque of the magnetic gear assembly changing with a1/a2. As can be seen from FIG. 5, when a1/a2<0.4, the output torque of the magnetic gear assembly increases as the ratio a1/a2 increases. When 0.4≤a1/a2≤0.6, the curve of the output torque of the magnetic gear assembly changing with a1/a2 is substantially flat. When a1/a2>0.6, the output torque of the magnetic gear assembly decreases as the ratio a1/a2 increases.

FIG. 6 shows a curve of an eddy current loss of the magnetic gear assembly changing with r1/a1. As can be seen from FIG. 6, when r1/a1=6, the eddy current loss of the magnetic gear assembly is the lowest. When r1/a1<6, the eddy current loss of the magnetic gear assembly decreases as the ratio r1/a1 increases. When r1/a1>6, the eddy current loss of the magnetic gear assembly tends to increase as the ratio r1/a1 increases.

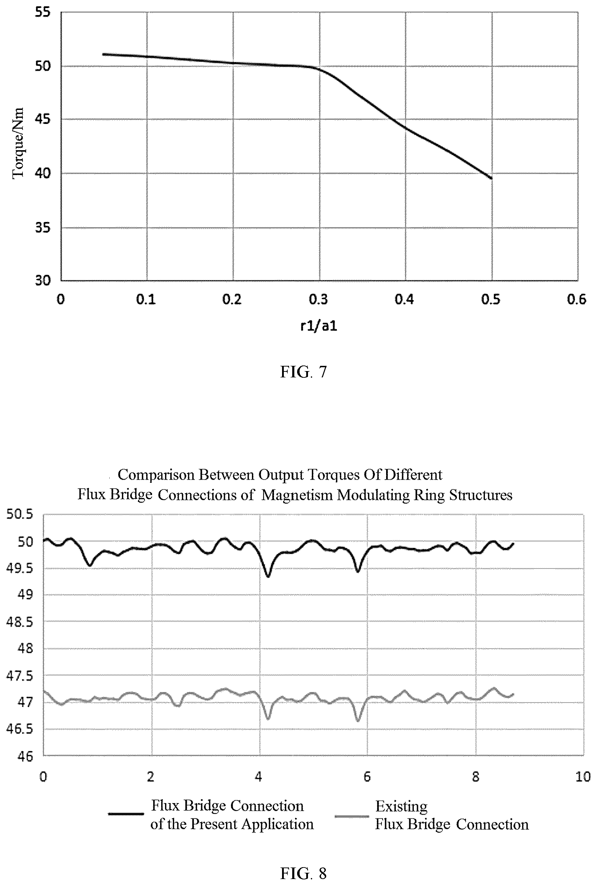

FIG. 7 shows a curve of the output torque of the magnetic gear assembly changing with r1/a1. As can be seen from FIG. 7, when r1/a1≤0.3, the output torque of the magnetic gear assembly tends to decrease smoothly as the ratio r1/a1 increases. When r1/a1>0.3, the output torque of the magnetic gear assembly tends to decrease rapidly as the ratio r1/a1 increases, and a slope of the latter is greater than a slope of the former.

FIG. 8 is a view showing a comparison between the output torque of a flux bridge structure of the first embodiment and the output torque of an existing flux bridge structure. As can be seen from FIG. 8, the flux bridge connection manner provided by the present invention can ensure that the magnetic gear assembly outputs a larger output torque than the output torque of the magnetic gear assembly of the existing flux bridge connection manner.

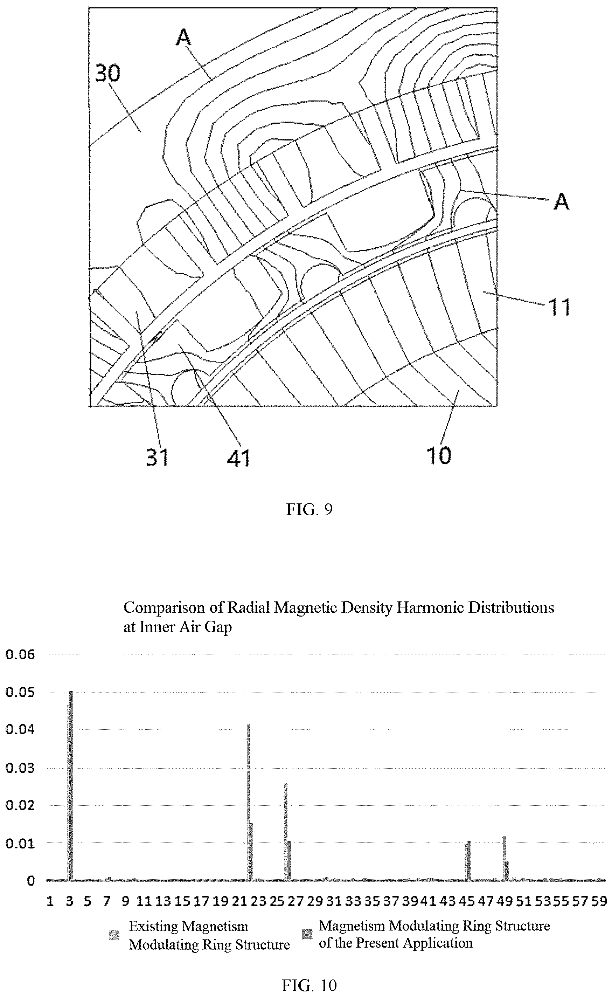

FIG. 9 shows flux lines of the magnetic gear assembly distributed in the magnetism modulating ring structure of the first embodiment. In FIG. 9, A denotes flux lines.

FIG. 10 shows a comparison of radial magnetic density harmonic distributions at an inner air gap.

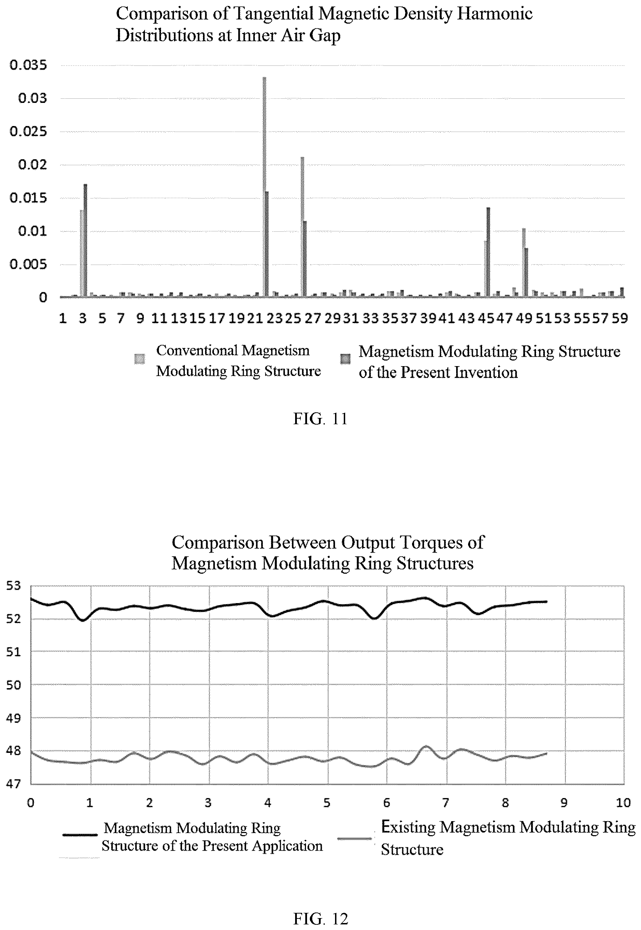

FIG. 11 shows a comparison of tangential magnetic density harmonic distributions at the inner air gap.

FIG. 12 is a view showing a comparison between an output torque of a magnetism modulating ring structure of the first embodiment and an output torque of an existing magnetism modulating ring structure. The magnetism modulating ring structure provided by the present invention can ensure that the magnetic gear assembly outputs a larger output torque than the output torque of the magnetic gear assembly of the existing magnetism modulating ring structure.

## Claims

1. A magnetic gear assembly, comprising:
a first rotor structure (10), wherein the first rotor structure (10) is configured to be sleeved on an outer peripheral side of a rotational shaft structure (20), and a first magnetic member (11) is provided on an outer peripheral surface of the first rotor structure (10);
a second rotor structure (30), wherein the second rotor structure (30) is sleeved over an outer peripheral side of the first rotor structure (10), and a second magnetic member (31) is provided on an inner peripheral surface of the second rotor structure (30); and
a magnetism modulating ring structure (40), wherein the magnetism modulating ring structure (40) is arranged in an annular gap (100) enclosed by the first magnetic member (11) and the second magnetic member (31), and comprises a plurality of modulating units (41) and a plurality of connection parts;
wherein each two adjacent modulating units (41) are connected by one of the plurality of connection parts to form the magnetism modulating ring structure (40);
**characterized in that**: a groove structure (411) is formed on one side of the modulating unit (41) facing the first rotor structure (10), and two sides of the groove structure (411) respectively form a curved boot-like part (412), and an edge of the curved boot-like part (412) facing the second rotor structure (30) has a curved contour line (4121) parallel to flux lines passing through an inside of the curved boot-like part (412).

2. The magnetic gear assembly according to claim 1, wherein each modulating unit (41) has a first side and a second side which are arranged to be opposite to each other, one curved boot-like part (412) of the first side of one modulating unit (41) of two adjacent modulating units (41) and another curved boot-like part (412) of the second side of the other modulating unit (41) of the two adjacent modulating units (41) are connected to a same connection part.

3. The magnetic gear assembly according to claim 2, wherein the plurality of connection parts are made of magnetic material; two adjacent curved boot-like parts (412) connected to the same connection part form a flux bridge structure; one end of the curved boot-like part (412) away from the connection part forms a flux bridge head of the flux bridge structure, and the connection part forms a flux bridge center of the flux bridge structure.

4. The magnetic gear assembly according to claim 3, wherein t1 denotes a thickness of the flux bridge head of the flux bridge structure, t2 denotes a thickness between an outer circumferential surface of the modulating unit (41) and a boot bottom of the curved boot-like part (412), and t1 and t2 satisfy: 0.25≤t1/t2≤0.3.

5. The magnetic gear assembly according to claim 3 or 4, wherein t3 denotes a thickness of the flux bridge center of the flux bridge structure, and t3 satisfies: t3 ≤0.5mm.

6. The magnetic gear assembly according to any one of claims 3 to 5, wherein a groove wall surface of the groove structure (411) is a first curved face, and r1 denotes a radius of curvature of the first curved face; a smooth transition is arranged between a side surface of the curved boot-like part (412) facing the second rotor structure (30) and a side surface of the connection part facing the second rotor structure (30), to form a curved transitional surface; the curved contour line (4121) of the curved transitional surface is parallel to the flux lines passing through the inside of the curved boot-like part (412); and r2 denotes a radius of curvature of the curved transitional surface, and r1 and r2 satisfy: r2=5×r1.

7. The magnetic gear assembly according to claim 6, wherein a1 denotes an included angle formed between the first side and the second side of each modulating unit (41), and a2 denotes an included angle formed between the first side of one modulating unit (41) and the first side of the other modulating unit (41) of two adjacent modulating units (41); a1 and a2 satisfy: 0.4 ≤a1/a2≤0.5; and r1 and a1 satisfy: 0.2≤r1/a1≤0.3.

8. The magnetic gear assembly according to claim 1 or 2, wherein the plurality of connection parts are made of nonmagnetic material; t4 denotes a thickness of one end of the curved boot-like part (412) away from the connection part; t5 denotes a thickness between an outer circumferential surface of the modulating unit (41) and a boot bottom of the curved boot-like part (412); and t4 and t5 satisfy: 0.25≤t4/t5≤0.3.

9. The magnetic gear assembly according to claim 8, wherein a boot face of the curved boot-like part (412) is a second curved face, and r3 denotes a radius of curvature of the second curved face; a groove wall surface of the groove structure (411) is a third curved face, and r4 denotes a radius of curvature of the third curved face; and r3 and r4 satisfy: r3=4×r4.

10. The magnetic gear assembly according to claim 9, wherein each modulating unit (41) has a first side and a second side which are arranged to be opposite to each other; a3 denotes an included angle formed between the first side and the second side of each modulating unit (41); a4 denotes an included angle formed between boot heads of two curved boot-like parts (412) of each modulating unit (41); a3 and a4 satisfy: 0.5≤a3/a4≤0.6; and r4 and a3 satisfy: 0.2≤ r4/a3≤0.3.

11. The magnetic gear assembly according to claim 3, wherein the plurality of connection parts and the plurality of modulating units (41) are formed integrally.

12. The magnetic gear assembly according to claim 1, wherein a rotational speed of the first rotor structure (10) is greater than a rotational speed of the magnetism modulating ring structure (40), and a rotational speed of the second rotor structure (30) is zero.

13. The magnetic gear assembly according to claim 1 or 12, wherein a gap is arranged between the magnetism modulating ring structure (40) and the first magnetic member (11), and a gap is arranged between the magnetism modulating ring structure (40) and the second magnetic member (31).

14. The magnetic gear assembly according to any one of claims 1, 12 to 13, wherein multiple first magnetic members (11) are arranged, and the multiple first magnetic members (11) are arranged at intervals along a circumferential direction of the first rotor structure (10); and/or multiple second magnetic members (31) are provided, and the multiple second magnetic members (31) are arranged at intervals along a circumferential direction of the second rotor structure (30).

15. A compound motor, **characterized by** comprising the magnetic gear assembly according to any one of claims 11 to 14.

## Patentansprüche

1. Magnetgetriebeanordnung, umfassend:
eine erste Rotorstruktur (10), wobei die erste Rotorstruktur (10) dazu konfiguriert ist, eine äußere Umfangsseite einer Rotationswellenstruktur (20) zu ummanteln, und ein erstes Magnetelement (11) auf einer äußeren Umfangsfläche der ersten Rotorstruktur (10) bereitgestellt ist;
eine zweite Rotorstruktur (30), wobei die zweite Rotorstruktur (30) eine äußere Umfangsseite der ersten Rotorstruktur (10) ummantelt und ein zweites Magnetelement (31) auf einer inneren Umfangsfläche der zweiten Rotorstruktur (30) bereitgestellt ist; und
eine magnetismusmodulierende Ringstruktur (40), wobei die magnetismusmodulierende Ringstruktur (40) in einem ringförmigen Spalt (100) angeordnet ist, der von dem ersten Magnetelement (11) und dem zweiten Magnetelement (31) eingeschlossen ist, und eine Mehrzahl von Modulationseinheiten (41) und eine Mehrzahl von Verbindungsteilen umfasst;
wobei jeweils zwei benachbarte Modulationseinheiten (41) durch eines der Mehrzahl von Verbindungsteilen zu der magnetismusmodulierenden Ringstruktur (40) verbunden sind;
**dadurch gekennzeichnet, dass**: auf einer der ersten Rotorstruktur (10) zugewandten Seite der Modulationseinheit (41) eine Nutstruktur (411) ausgebildet ist und zwei Seiten der Nutstruktur (411) jeweils einen gekrümmten stiefelartigen Teil (412) ausbilden und ein der zweiten Rotorstruktur (30) zugewandter Rand des gekrümmten stiefelartigen Teils (412) eine gekrümmte Konturlinie (4121) parallel zu Flusslinien aufweist, die durch das Innere des gekrümmten stiefelartigen Teils (412) verlaufen.

2. Magnetgetriebeanordnung nach Anspruch 1, wobei jede Modulationseinheit (41) eine erste Seite und eine zweite Seite aufweist, die derart angeordnet sind, dass sie einander gegenüberliegen, wobei ein gekrümmter stiefelartiger Teil (412) der ersten Seite einer Modulationseinheit (41) von zwei benachbarten Modulationseinheiten (41) und ein anderer gekrümmter stiefelartiger Teil (412) der zweiten Seite der anderen Modulationseinheit (41) der zwei benachbarten Modulationseinheiten (41) mit demselben Verbindungsteil verbunden sind.

3. Magnetgetriebeanordnung nach Anspruch 2, wobei die Mehrzahl von Verbindungsteilen aus magnetischem Material hergestellt sind; zwei benachbarte gekrümmte stiefelartige Teile (412), die mit demselben Verbindungsteil verbunden sind, eine Flussbrückenstruktur ausbilden; ein Ende des gekrümmten stiefelartigen Teils (412) weg von dem Verbindungsteil einen Flussbrückenkopf der Flussbrückenstruktur ausbildet und das Verbindungsteil ein Flussbrückenzentrum der Flussbrückenstruktur ausbildet.

4. Magnetgetriebeanordnung nach Anspruch 3, wobei t1 eine Dicke des Flussbrückenkopfs der Flussbrückenstruktur bezeichnet, t2 eine Dicke zwischen einer äußeren Umfangsfläche der Modulationseinheit (41) und einer Stiefelunterseite des gekrümmten stiefelartigen Teils (412) bezeichnet und t1 und t2 Folgendes erfüllen: 0,25 ≤ t1 / t2 ≤ 0,3.

5. Magnetgetriebeanordnung nach Anspruch 3 oder 4, wobei t3 eine Dicke des Flussbrückenzentrums der Flussbrückenstruktur bezeichnet und t3 Folgendes erfüllt: t3 ≤ 0,5 mm.

6. Magnetgetriebeanordnung nach einem der Ansprüche 3 bis 5, wobei eine Nutwandfläche der Nutstruktur (411) eine erste gekrümmte Fläche ist und r1 einen Krümmungsradius der ersten gekrümmten Fläche bezeichnet; ein glatter Übergang zwischen einer der zweiten Rotorstruktur (30) zugewandten Seitenfläche des gekrümmten stiefelartigen Teils (412) und einer der zweiten Rotorstruktur (30) zugewandten Seitenfläche des Verbindungsteils angeordnet ist, um eine gekrümmte Übergangsfläche auszubilden; die gekrümmte Konturlinie (4121) der gekrümmten Übergangsfläche parallel zu den Flusslinien ist, die durch das Innere des gekrümmten stiefelartigen Teils (412) verlaufen; und r2 einen Krümmungsradius der gekrümmten Übergangsfläche bezeichnet und r1 und r2 Folgendes erfüllen: r2 = 5 × r1.

7. Magnetgetriebeanordnung nach Anspruch 6, wobei a1 einen eingeschlossenen Winkel bezeichnet, der zwischen der ersten Seite und der zweiten Seite jeder Modulationseinheit (41) ausgebildet ist, und a2 einen eingeschlossenen Winkel bezeichnet, der zwischen der ersten Seite einer Modulationseinheit (41) und der ersten Seite der anderen Modulationseinheit (41) zweier benachbarter Modulationseinheiten (41) ausgebildet ist; a1 und a2 Folgendes erfüllen: 0,4 ≤ a1 / a2 ≤ 0,5; und r1 und a1 Folgendes erfüllen: 0,2 ≤ r1 / a1 ≤ 0,3.

8. Magnetgetriebeanordnung nach Anspruch 1 oder 2, wobei die Mehrzahl von Verbindungsteilen aus nichtmagnetischem Material hergestellt sind; t4 eine Dicke eines Endes des gekrümmten stiefelartigen Teils (412) weg von dem Verbindungsteil bezeichnet; t5 eine Dicke zwischen einer Außenumfangsfläche der Modulationseinheit (41) und einer Stiefelunterseite des gekrümmten stiefelartigen Teils (412) bezeichnet; und t4 und t5 Folgendes erfüllen: 0,25 ≤ t4 / t5 ≤ 0,3.

9. Magnetgetriebeanordnung nach Anspruch 8, wobei eine Stiefelfläche des gekrümmten stiefelartigen Teils (412) eine zweite gekrümmte Fläche ist und r3 einen Krümmungsradius der zweiten gekrümmten Fläche bezeichnet; eine Nutwandfläche der Nutstruktur (411) eine dritte gekrümmte Fläche ist und r4 einen Krümmungsradius der dritten gekrümmten Fläche bezeichnet; und r3 und r4 Folgendes erfüllen: r3 = 4 × r4.

10. Magnetgetriebeanordnung nach Anspruch 9, wobei jede Modulationseinheit (41) eine erste Seite und eine zweite Seite aufweist, die derart angeordnet sind, dass sie einander gegenüberliegen; a3 einen eingeschlossenen Winkel bezeichnet, der zwischen der ersten Seite und der zweiten Seite jeder Modulationseinheit (41) ausgebildet ist; a4 einen eingeschlossenen Winkel bezeichnet, der zwischen Stiefelköpfen von zwei gekrümmten stiefelartigen Teilen (412) jeder Modulationseinheit (41) ausgebildet ist; a3 und a4 Folgendes erfüllen: 0,5 ≤ a3 / a4 ≤ 0,6; und r4 und a3 Folgendes erfüllen: 0,2 ≤ r4 / a3 ≤ 0,3.

11. Magnetgetriebeanordnung nach Anspruch 3, wobei die Mehrzahl von Verbindungsteilen und die Mehrzahl von Modulationseinheiten (41) einstückig ausgebildet sind.

12. Magnetgetriebeanordnung nach Anspruch 1, wobei eine Drehzahl der ersten Rotorstruktur (10) größer als eine Drehzahl der magnetismusmodulierenden Ringstruktur (40) ist und eine Drehzahl der zweiten Rotorstruktur (30) null ist.

13. Magnetgetriebeanordnung nach Anspruch 1 oder 12, wobei ein Spalt zwischen der magnetismusmodulierenden Ringstruktur (40) und dem ersten Magnetelement (11) angeordnet ist und ein Spalt zwischen der magnetismusmodulierenden Ringstruktur (40) und dem zweiten Magnetelement (31) angeordnet ist.

14. Magnetgetriebeanordnung nach einem der Ansprüche 1, 12 oder 13, wobei mehrere erste Magnetelemente (11) angeordnet sind und die mehreren ersten Magnetelemente (11) in Intervallen entlang einer Umfangsrichtung der ersten Rotorstruktur (10) angeordnet sind; und/oder mehrere zweite Magnetelemente (31) bereitgestellt sind und die mehreren zweiten Magnetelemente (31) in Intervallen entlang einer Umfangsrichtung der zweiten Rotorstruktur (30) angeordnet sind.

15. Verbundmotor, **dadurch gekennzeichnet, dass** er die Magnetgetriebeanordnung nach einem der Ansprüche 11 bis 14 umfasst.

## Revendications

1. Ensemble d'engrenage magnétique comprenant :
Une première structure de rotor (10), la première structure de rotor (10) étant conçue pour être gainée sur un côté périphérique externe d'une structure d'arbre rotatif (20), et un premier élément magnétique (11) est disposé sur une surface périphérique externe de la première structure de rotor (10) ;
une deuxième structure de rotor (30), la deuxième structure de rotor (30) étant gainée sur un côté périphérique externe de la première structure de rotor (10), et un deuxième élément magnétique (31) est prévu sur une surface périphérique interne de la deuxième structure de rotor (30) ; et
une structure annulaire de modulation du magnétisme (40), la structure annulaire de modulation du magnétisme (40) étant disposée dans un espace annulaire (100) entouré par le premier élément magnétique (11) et le deuxième élément magnétique (31), et comprenant une pluralité d'unités de modulation (41) et une pluralité de pièces de liaison ;
dans lequel chacune des deux unités de modulation adjacentes (41) est reliée par une pièce de liaison de la pluralité de pièces de liaison pour former la structure annulaire de modulation du magnétisme (40) ;
**caractérisé en ce que** : une structure de rainure (411) est formée sur un côté de l'unité de modulation (41) faisant face à la première structure de rotor (10), et deux côtés de la structure de rainure (411) forment respectivement une partie incurvée en forme de soufflet (412), et un bord de la partie incurvée en forme de soufflet (412) faisant face à la deuxième structure de rotor (30) présente une ligne de contour incurvée (4121) parallèle aux lignes de flux passant par l'intérieur de la partie incurvée en forme de soufflet (412).

2. Ensemble d'engrenage magnétique selon la revendication 1, dans lequel chaque unité de modulation (41) a un premier côté et un deuxième côté qui sont disposés de façon à être opposés l'un à l'autre, une partie incurvée en forme de soufflet (412) du premier côté d'une unité de modulation (41) de deux unités de modulation adjacentes (41) et une autre partie incurvée en forme de soufflet (412) du deuxième côté de l'autre unité de modulation (41) des deux unités de modulation adjacentes (41) sont reliées à une même pièce de liaison.

3. Ensemble d'engrenage magnétique selon la revendication 2, dans lequel la pluralité de parties de liaison sont constituées d'un matériau magnétique ; deux parties incurvées en forme de soufflet adjacentes (412) reliées à la même partie de liaison forment une structure de pont de flux ; une extrémité de la partie incurvée en forme de soufflet (412) à l'écart de la partie de liaison forme une tête de pont de flux de la structure de pont de flux, et la partie de liaison forme un centre de pont de flux de la structure de pont de flux.

4. Ensemble d'engrenage magnétique selon la revendication 3, dans lequel t1 désigne une épaisseur de la tête de pont de flux de la structure de pont de flux, t2 désigne une épaisseur entre une surface circonférentielle externe de l'unité de modulation (41) et un fond de soufflet de la partie incurvée en forme de soufflet (412), et t1 et t2 satisfont à : 0,25 ≤ t1/t2 ≤ 0,3.

5. Ensemble d'engrenage magnétique selon la revendication 3 ou 4, dans lequel t3 désigne une épaisseur du centre de pont de flux de la structure de pont de flux, et t3 satisfait : t3≤0,5 mm.

6. Ensemble d'engrenage magnétique selon l'une quelconque des revendications 3 à 5, dans lequel une surface de paroi de rainure de la structure de rainure (411) est une première face incurvée, et r1 désigne un rayon de courbure de la première face incurvée ; une transition lisse est disposée entre une surface latérale de la partie incurvée (412) en forme de soufflet faisant face à la deuxième structure de rotor (30) et une surface latérale de la partie de liaison faisant face à la deuxième structure de rotor (30), pour former une surface de transition incurvée ; la ligne de contour incurvée (4121) de la surface incurvée en forme de soufflet est parallèle aux lignes de flux traversant l'intérieur de la partie incurvée en forme de soufflet (412) ; et r2 désigne un rayon de courbure de la surface de transition incurvée, et r1 et r2 satisfont à : r2 = 5 × r1.

7. Ensemble d'engrenage magnétique selon la revendication 6, dans lequel a1 désigne un angle inclus formé entre le premier côté et le deuxième côté de chaque unité de modulation (41), et a2 désigne un angle inclus formé entre le premier côté d'une unité de modulation (41) et le premier côté de l'autre unité de modulation (41) de deux unités de modulation (41) adjacentes ; a1 et a2 satisfont à : 0,4 ≤ a1/a2 ≤ 0,5 ; et r1 et a1 satisfont à : 0,2 ≤ r1/a1 ≤ 0,3.

8. Ensemble d'engrenage magnétique selon la revendication 1 ou 2, dans lequel la pluralité de pièces de liaison sont constituées d'un matériau non magnétique ; t4 désigne une épaisseur d'une extrémité de la pièce incurvée en forme de soufflet (412) à l'écart de la pièce de liaison ; t5 désigne une épaisseur entre une surface circonférentielle externe de l'unité de modulation (41) et un fond de soufflet de la pièce incurvée en forme de soufflet (412) ; et t4 et t5 satisfont à : 0,25 ≤ t4/t5 ≤ 0,3.

9. Ensemble d'engrenage magnétique selon la revendication 8, dans lequel une face de soufflet de la partie incurvée en forme de soufflet (412) est une deuxième face incurvée, et r3 désigne un rayon de courbure de la deuxième face incurvée ; une surface de paroi de rainure de la structure de rainure (411) est une troisième face incurvée, et r4 désigne un rayon de courbure de la troisième face incurvée ; et r3 et r4 satisfont à : r3 = 4 × r4.

10. Ensemble d'engrenage magnétique selon la revendication 9, dans lequel chaque unité de modulation (41) a un premier côté et un deuxième côté qui sont agencés de façon à être opposés l'un à l'autre ; a3 désigne un angle inclus formé entre le premier côté et le deuxième côté de chaque unité de modulation (41) ; a4 désigne un angle inclus formé entre les têtes de soufflet de deux parties incurvées en forme de soufflet (412) de chaque unité de modulation (41) ; a3 et a4 satisfont à : 0,5 ≤ a3/a4 ≤ 0,6; r4 et a3 satisfont à : 0,2 ≤ r4/a3 ≤ 0,3.

11. Ensemble d'engrenage magnétique selon la revendication 3, dans lequel la pluralité de pièces de liaison et la pluralité d'unités de modulation (41) sont formées d'un seul tenant.

12. Ensemble d'engrenage magnétique selon la revendication 1, dans lequel une vitesse de rotation de la première structure de rotor (10) est supérieure à une vitesse de rotation de la structure annulaire de modulation du magnétisme (40), et une vitesse de rotation de la deuxième structure de rotor (30) est nulle.

13. Ensemble d'engrenage magnétique selon la revendication 1 ou 12, dans lequel un entrefer est agencé entre la structure annulaire de modulation du magnétisme (40) et le premier élément magnétique (11), et un entrefer est agencé entre la structure annulaire de modulation du magnétisme (40) et le deuxième élément magnétique (31).

14. Ensemble d'engrenage magnétique selon l'une quelconque des revendications 1, 12 à 13, dans lequel de multiples premiers éléments magnétiques (11) sont agencés, et les multiples premiers éléments magnétiques (11) sont agencés à des intervalles le long d'une direction circonférentielle de la première structure de rotor (10) ; et/ou de multiples deuxièmes éléments magnétiques (31) sont agencés, et les multiples deuxièmes éléments magnétiques (31) sont agencés à des intervalles le long d'une direction circonférentielle de la deuxième structure de rotor (30).

15. Moteur composite, **caractérisé en ce qu'** il comprend l'ensemble d'engrenage magnétique selon l'une quelconque des revendications 11 à 14.
